# EUROPÄISCHE PATENTSCHRIFT

(11) **EP 0 937 490 B1**
(45) Veröffentlichungstag und Bekanntmachung des Hinweises auf die Patenterteilung: **16.06.2004**
(21) Anmeldenummer: 98119183.6
(22) Anmeldetag: 12.10.1998
(51) Int. Cl.: B01D 35/30, F02M 37/22

(54) **Filtereinrichtung in Modulbauweise**
Modular filtering device
Dispositif de filtration modulaire

(30) Priorität: 21.02.1998 DE 19807373
(43) Veröffentlichungstag der Anmeldung: 25.08.1999
(73) Patentinhaber: ROBERT BOSCH GMBH, 70442 Stuttgart (DE)
(72) Erfinder: Hernandez, Eduardo Ramirez, 28812 Alcala de Henares (ES); Burgoa, Julen, 48140 Yurre, Bilbao (ES); Torres, Enrique Casillas, 28017 Madrid (ES); Sanchez, David Ortiz, 28043 Madrid (ES)

(56) Entgegenhaltungen:
- EP-A- 0 285 416
- EP-A- 0 702 144
- DE-A- 2 845 520
- DE-A- 3 638 617
- US-A- 4 596 224

## Beschreibung

### Stand der Technik

Die Erfindung geht aus von einer Filtereinrichtung in Modulbauweise, insbesondere für Dieselkraftstoff, nach der im Oberbegriff des Anspruchs 1 näher angegebenen Gattung.

Es ist schon eine solche Filtereinrichtung in Modulbauweise aus der DE 34 21 815 A1 bekannt, wobei zwischen einem die Anschlüsse für Zulauf und Ablauf enthaltenden Deckelmodul und einer auswechselbaren Filterbox ein Gehäusemodul angeordnet ist, der hier eine Heizung aufnimmt. Durch eine zentrale Verschraubung aus zwei ineinandergeschraubten Hohlschrauben werden alle Teile zusammengehalten. Dabei ist die von der Filterbox entfernt liegende erste Hohlschraube mit ihrem Kopfteil dicht und fest im Deckelmodul befestigt, indem sie eingegossen bzw. eingespritzt ist. Obwohl solche Zentralverschraubungen in vielen Fällen vorteilhaft sind, hat diese Hohlverschraubung doch den Nachteil, daß hier der Aufwand hinsichtlich Bauweise und Montage für zwei Hohlschrauben relativ hoch ist. Eine zweite Hohlschraube, die sich von der ersten Hohlschraube erheblich unterscheidet, muß hier den Gehäusemodul durchdringen, damit die Filterbox am Gehäusemodul festgeschraubt werden kann. Wenn die Filtereinrichtung mit ihrem metallischen Deckelmodul an einem Maschinenteil befestigt wird, so können sich bei einer äußeren Einwirkung von Kräften auf die Filterbox Nachteile bei der Stabilität und hinsichtlich der Abdichtungen ergeben. Ein Austausch von Heizungselementen ist hier nur nach vorhergehendem Entfernen der Filterbox möglich. Die Flexibilität ist bei dieser Modulbauweise relativ begrenzt, insbesondere bei der Montage.

Ferner ist aus der EP 0 581 178 B1 eine Filtereinrichtung in Modulbauweise bekannt, bei der eine Filterbox über eine Zentralverschraubung an einen metallischen Gehäusemodul anschraubbar ist, an dessen entgegengesetzter, von der Filterbox abgewandten Seite, ein zusätzlicher Deckelmodul anbaubar ist. Ein genauerer Hinweis auf die Bauart der zentralen Hohlverschraubung wird hier nicht gegeben. Nachteilig bei dieser Filtereinrichtung ist, dass hier der metallische Gehäusemodul alle Anschlüsse für Zulauf und Ablauf und dem entsprechende Kanäle aufweist, so dass er relativ aufwendig und kostspielig baut. Zudem muss der Gehäusemodul auch so ausgeführt werden, dass er eine Strömungsführung über den Deckelmodul ermöglicht. Außerdem kann es in manchen Fällen un-günstig sein, dass der Deckelmodul nur über einen Schnappverschluss am Gehäusemodul befestigbar ist und somit sich der Deckelmodul weniger zur Aufnahme von irgendwelchen Anschlüssen eignet.

Die EP-A-0 702 144 zeigt eine Filteranordnung, bei der ein separates ein Wechselfilterelement aufnehmendes Gehäuseteil über eine am Außenumfang vorgesehene Schnellwechselverbindung an einen Filterkopf anschraubbar ist.

### Vorteile der Erfindung

Die erfindungsgemäße Filtereinrichtung in Modulbauweise mit den kennzeichnenden Merkmalen des Hauptanspruchs hat demgegenüber den Vorteil, dass sie eine relativ einfache und kostengünstige Bauart ermöglicht, die zudem hohe Anforderungen an Flexibilität erfüllen kann. Die Filtereinrichtung arbeitet mit möglichst wenig Bauelementen und Dichtstellen, wobei für die Verschraubung und die Abdichtung im wesentlichen erprobte, standardmäßige Bauelemente verwendbar sind. Zudem erlaubt die Filtereinrichtung trotz ihrer Modulbauweise eine relativ kompakte und stabile Bauweise, wobei Kräfte aus der Filterbox und aus dem Deckelmodul unmittelbar auf das metallische Gehäusemodul übertragen werden können. Der Deckelmodul mit seinem Schnellverschluß erlaubt dabei eine einfache und schnelle Montage, so daß auch im Deckelmodul angeordnete Heizungselemente ohne zusätzliche Entfernung der Filterbox austauschbar sind. Weiterhin läßt sich hier eine serienmäßige Filterbox verwenden.

Durch die in den Unteransprüchen aufgeführten Maßnahmen sind vorteilhafte Weiterbildungen und Verbesserungen der im Hauptanspruch angegebenen Filtereinrichtung in Modulbauweise möglich. Eine besonders einfache, kompakte, stabile und kostengünstige Bauweise der Filtereinrichtung ergibt sich bei einer Ausbildung gemäß den Ansprüchen 2 bis 5. Ferner ist es vorteilhaft, daß am Deckelmodul gemäß den Ansprüchen 6 und 7 alle fluidischen und elektrischen Anschlüsse herangeführt sind, so daß sich günstige Montageverhältnisse ergeben, die vor allem durch eine Ausbildung nach den Ansprüchen 8 und 9 noch verbessert werden können. Weitere vorteilhafte Ausgestaltungen ergeben sich aus der Beschreibung und der Zeichnung.

### Zeichnung

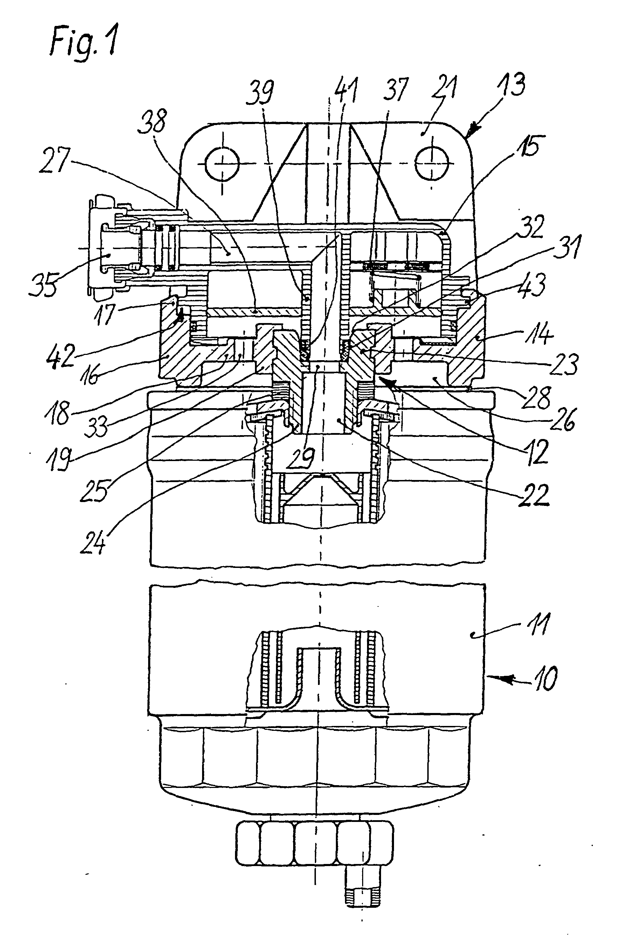

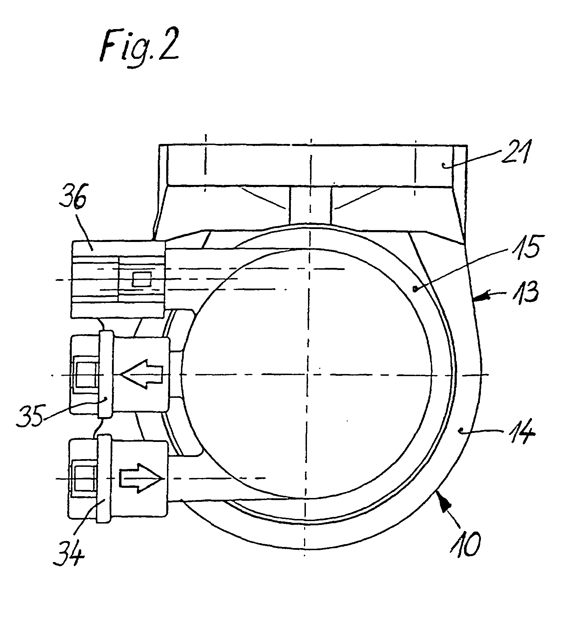

Ein Ausführungsbeispiel der Erfindung ist in der Zeichnung dargestellt und in der nachfolgenden Beschreibung näher erläutert. Es zeigen Figur 1 einen teilweisen Längsschnitt durch eine Filtereinrichtung in Modulbauweise in vereinfachter Darstellung und Figur 2 eine Draufsicht auf die Filtereinrichtung nach Figur 1.

### Beschreibung des Ausführungsbeispiels

Die Figur 1 zeigt eine Filtereinrichtung 10 in Modulbauweise teilweise im Schnitt, wie sie zum Reinigen von Dieselkraftstoff verwendet wird. Die Filtereinrichtung 10 weist eine an sich bekannte, auswechselbare Filterbox 11 auf, die über eine zentrale Hohlverschraubung 12 an einem aus mehreren Modulen aufgebauten Filterkopf 13 befestigt ist. Dieser Filterkopf 13 besteht aus einem metallischen Gehäusemodul 14, an den ein aus Kunststoff bestehender Deckelmodul 15 angebaut ist. Deckelmodul 15 und Filterbox 11 liegen somit auf entgegengesetzten Seiten des Gehäusemoduls 14.

Wie die Figur 1 in Verbindung mit Figur 2 näher zeigt, in der eine Draufsicht auf die Filtereinrichtung 10 nach Figur 1 dargestellt ist, besteht der Gehäusemodul 14 im wesentlichen aus einer Ringscheibe 16, bei welcher ein hülsenförmiger Außenring 17 über einen ebenen, stegförmigen Boden 18 in einen nabenartigen Innenring 19 übergeht. Am Außenring 17 ist seitlich ein Flansch 21 angeformt, mit dem die Filtereinrichtung 10 an einem nicht näher gezeigten Maschinenteil befestigt wird. Im nabenartigen Innenring 19 ist eine Hohlschraube 22 mit ihrem verdickten Kopfteil 23 unlösbar und dicht befestigt. Wenn der Gehäusemodul 14 in üblicher Weise als Aluminium-Druckgußteil hergestellt wird, so läßt sich auf einfache Weise die Hohlschraube 22 eingießen bzw. einformen. Die Hohlschraube 22 ragt dabei mit ihrem Gewindestutzen 24 in die Filterbox 11 hinein, so daß diese in an sich bekannter Weise festschraubbar ist. Ein Innendichtring 25 übernimmt dabei die Abdichtung zwischen einer Schmutzseite 26 und einer Reinseite 27, während ein Außendichtring 28 in üblicher Weise die Abdichtung nach außen hin übernimmt.

Die Hohlschraube 22 weist im Bereich des Kopfteils 23 in ihrem inneren axialen Durchgang einen schmalen Bund 29 auf, der eine zentrale Aufnahmebohrung 31 begrenzt. Diese Aufnahmebohrung 31 liegt im Kopfteil 23 entgegengesetzt zum Gewindestutzen 24 und öffnet sich nach außen hin über einen trichterförmigen Eingangsbereich 32. Für den Durchfluß von Druckmittel auf der Schmutzseite sind im Boden 18 Durchgangsöffnungen 33 angeordnet.

Wie ferner die Figur 1 in Verbindung mit Figur 2 näher zeigt, sind an dem aus Kunststoff bestehenden Deckelmodul 15 ein erster Anschluß 34 für den Zulauf von Dieselkraftstoff zur Schmutzseite 26, ein zweiter Anschluß 35 für den Ablauf von gereinigtem Dieselkraftstoff von der Reinseite 27 sowie ein elektrischer Anschluß 36 vorhanden, an den eine im Dekkelmodul 15 angeordnete Heizeinrichtung 37 angeschlossen ist. Alle drei Anschlüsse 34, 35, 36 liegen in der gleichen radialen Ebene der Filtereinrichtung 10 und zusammen auf einer Seite des Deckelmoduls 15, die - bezogen auf Figur 2 - um ca. 90 Grad zum Flansch 21 verdreht angeordnet ist. Die Heizeinrichtung 37 wird im Deckelmodul 15 durch eine von der Flüssigkeit durchströmbare Lochscheibe 38 gehalten. Wie die Figur 1 näher zeigt, steht der zweite Anschluß 35 mit einem zentralen Rohrstutzen 39 in Verbindung, der mit seinem freien Ende in die Aufnahmebohrung 31 der Hohlschraube 22 ragt. Ein am Rohrstutzen 39 angeordneter Dichtring 41 übernimmt dabei die Abdichtung zwischen der Schmutzseite 26 und der Reinseite 27.

Der Deckelmodul 15 mit seinen Anschlüssen 34 bis 36 ist durch einen an sich bekannten Schnellverschluß 42 mit dem Gehäusemodul 14 in lösbarer Weise fest verbunden; beim Befestigen des Deckelmoduls 15 führt er dabei eine Drehbewegung aus. Zu diesem Zweck sind an der Innenseite des Außenrings 17 bzw. an der Außenwand des Deckelmoduls 15 entsprechende Rampen und Stege 43 ausgebildet, so daß eine schnelle und einfache Befestigung der beiden Module 14, 15 aneinander möglich ist. Der Schnellverschluß 42 kann dabei als schraubenartiger oder bajonettartiger Schnellverschluß ausgeführt werden, wie dies an sich bekannt ist. Der Deckelmodul 15 muß dabei vorzugsweise eine Drehbewegung von 1/3 bis 1/4 des vollen Umfangs ausführen. Bei dieser Montage mit Drehbewegung sorgt der trichterförmige Eingangsbereich 32 für eine sichere und einwandfreie Einführung des zentralen Rohrstutzens 39 in die Aufnahmebohrung 31.

Die Wirkungsweise der Filtereinrichtung 10 wird wie folgt kurz beschrieben, da sie im wesentlichen als an sich bekannt vorausgesetzt werden kann. Der zu reinigende Kraftstoff gelangt über den ersten Anschluß 34 in den Innenraum des Dekkelmoduls 15, wo er bei Bedarf von der Heizeinrichtung 37 erwärmt werden kann. Er strömt weiter durch die Lochscheibe 38 und kann über die Durchgangsöffnungen 33 den Gehäusemodul 14 durchströmen und weiter auf die Schmutzseite 26 der Filterbox 11 gelangen. Der in der Filterbox 11 gereingte Druckmittelstrom fließt über die Hohlschraube 22 ab und gelangt über den zentralen Rohrstutzen 39 des Deckelmoduls 15 zum Ablauf-Anschluß 35.

Wie Figur 1 besonders deutlich zeigt, ermöglicht die im metallischen Gehäusemodul 14 eingegossene Hohlschraube 23 eine stabile und feste Verbindung zur Filterbox 11 hin, so daß dort wirkende äußere Kräfte gut auf den Flansch 21 übertragen werden können. Ebenso werden über die Leitungen an den Anschlüssen 34 bis 36 auf den Deckelmodul 15 einwirkende äußere Kräfte durch den Schnellverschluß 42 sicher auf den metallischen Deckelmodul 15 übertragen und damit abgefangen. Insgesamt ergibt sich dadurch eine besonders robuste und stabile Bauweise. Dichtungen zwischen Schmutz- und Feinseite und nach außen hin lassen sich weitgehend mit standardmäßigen Dichtelementen durchführen. Während die Filtereinrichtung 10 mit ihrem Flansch 21 an einem Maschinenteil befestigt ist, lassen sich die Filterbox 11 einerseits und der mit den Anschlußleitungen verbundene Deckelmodul 15 andererseits jeweils für sich austauschen, wodurch eine hohe Flexibilität in der Montage und im Betrieb erreichbar ist.

Selbstverständlich sind an der gezeigten Ausführungsform Änderungen möglich, ohne vom Gedanken der Erfindung abzuweichen. Anstelle der gezeigten Anschlüsse für den Zulauf und den Ablauf können ohne weiteres auch Schlauchanschlußstutzen verwendet werden. Auch die Anordnung der Anschlüsse läßt sich in Grenzen variieren. Auch läßt sich anstelle der Filterbox ein Gehäusefilter verwenden, bei dem nach dem Abschrauben des Gehäuses der eigentliche Filtereinsatz austauschbar ist.

## Patentansprüche

1. Filtereinrichtung in Modulbauweise, insbesondere für Dieselkraftstoff, mit einem aus mehreren Modulen aufgebautem Filterkopf (13), an dem mittels einer zentralen Hohlverschraubung eine auswechselbare Filterbox (11) angeschraubt ist, wozu eine Hohlschraube (22) unlösbar im Filterkopf (13) befestigt ist und mit einem rohrförmigen Gewindestutzen (24) in die Filterbox (11) ragt und bei der der Filterkopf (13) einen die Anschlüsse (34, 35) für Zulauf und Ablauf aufweisenden Deckelmodul (15) und einen zwischen Deckelmodul (15) und Filterbox (11) angeordneten Gehäusemodul (14) aufweist, wobei die Hohlschraube (22) einstückig ausgeführt und dicht und fest im Gehäusemodul (14) befestigt ist **dadurch gekennzeichnet, daß** die Hohlschraube (22) auf ihrer vom Gewindestutzen abgewandten Seite eine zentrale Aufnahmebohrung (31) aufweist, in die der Deckelmodul (15) mit einem zur Aufnahmebohrung (31) passenden, zentralen Rohrstutzen (39) ragt und daß der Deckelmodul (15) mit einem eine Drehbewegung ausführenden Schnellverschluß (42) im Gehäusemodul (14) lösbar befestigt ist.

2. Filtereinrichtung nach Anspruch 1, **dadurch gekennzeichnet, daß** an dem Gehäusemodul (14) Befestigungsmittel (21) zum Befestigen der Filtereinrichtung (10) an einem Maschinenteil angeordnet sind.

3. Filtereinrichtung nach Anspruch 1 oder 2, **dadurch gekennzeichnet, daß** der Gehäusemodul (14) im wesentlichen als Ringscheibe (16) ausgeführt ist, bei der ein hülsenförmiger Außenring (17) über einen flachen Boden (18) mit einem nabenartigen Innenring (19) verbunden ist, in dem die Hohlschraube (22) mit einem Kopfteil (23) unlösbar und dicht befestigt ist und daß insbesondere an der äußeren Seite des Außenrings (17) die Befestigungsmittel (21) angeformt sind.

4. Filtereinrichtung nach einem der Ansprüche 1 bis 3, **dadurch gekennzeichnet, daß** der Gehäusemodul (14) aus Metall besteht, insbesondere aus Aluminium oder einer Aluminiumverbindung.

5. Filtereinrichtung nach einem der Ansprüche 3 bis 4, **dadurch gekennzeichnet, daß** an dem Außenring (17) des Gehäusemoduls (14) auf seiner Innenseite und an dem Deckelmodul (15) an seinem Außenumfang Stege und Rampen (43) für einen eine Verdrehbewegung ausführenden Schnellverschluß (42) angeordnet sind.

6. Filtereinrichtung nach einem der Ansprüche 1 bis 5, **dadurch gekennzeichnet, daß** der Deckelmodul (15) eine elektrische Heizeinrichtung (37) aufnimmt und insbesondere aus Kunststoff besteht.

7. Filtereinrichtung nach Anspruch 6, **dadurch gekennzeichnet, daß** die beiden Druckmittel-Anschlüsse (34, 35) und ein elektrischer Anschluß (36) am Deckelmodul (15) auf der gleichen Seite angeordnet sind, insbesondere parallel zueinander.

8. Filtereinrichtung nach Anspruch 7, **dadurch gekennzeichnet, daß** alle drei Anschlüsse (34, 35, 36) in der gleichen radialen Ebene am Deckelmodul (15) angeordnet sind.

9. Filtereinrichtung nach einem oder mehreren der Ansprüche 1 bis 8, **dadurch gekennzeichnet, daß** die zentrale Aufnahmebohrung (31) in der Hohlschraube (22) einen das Einstecken des Rohrstutzens (39) erleichternden, trichterförmigen Eingangsbereich (32) hat.

10. Filtereinrichtung nach Anspruch 9, **dadurch gekennzeichnet, daß** die Aufnahmebohrung (31) durch einen ringförmigen Bund begrenzt ist und der zentrale Rohrstutzen (39) einen die Schmutz- von der Reinseite (26, 27) voneinander trennenden Dichtring (41) trägt.

## Claims

1. Modular filtering device, in particular for diesel fuel, having a filter head (13), which is composed of a plurality of modules and to which an exchangeable filter box (11) is screwed by means of a central hollow screw connection, for which purpose a hollow screw (22) is secured non-releasably in the filter head (13) and projects by means of a tubular threaded stud (24) into the filter box (11), and in which the filter head (13) has a cover module (15), which includes the connections (34, 35) for feed and discharge, and a housing module (14) arranged between cover module (15) and filter box (11), the hollow screw (22) being of single-piece design and being secured in a sealed and fixed manner in the housing module (14), **characterized in that** the hollow screw (22) has, on its side remote from the threaded stud, a central receiving bore (31), into which the cover module (15) projects by means of a central tube stud (39), which fits the receiving bore (31), and **in that** the cover module (15) is releasably secured in the housing module (14) by means of a quick-acting closure (42) which executes a rotary motion.

2. Filtering device according to Claim 1, **characterized in that** securing means (21) for securing the filtering device (10) to an engine part are arranged on the housing module (14).

3. Filtering device according to Claim 1 or 2, **characterized in that** the housing module (14) is designed substantially as an annular disc (16), in which a sleeve-like outer ring (17) is connected via a flat base (18) to a hub-like inner ring (19), in which the hollow screw (22) is secured to a head part (23) in a non-releasable and sealed manner, and **in that** the securing means (21) are formed integrally in particular on the outer side of the outer ring (17).

4. Filtering device according to one of Claims 1 to 3, **characterized in that** the housing module (14) consists of metal, in particular of aluminium or an aluminium compound.

5. Filtering device according to one of Claims 3 to 4, **characterized in that** webs and ramps (43) for a quick-acting closure (42), which executes a turning motion, are arranged on the inner side of the outer ring (17) of the housing module (14) and on the outer periphery of the cover module (15).

6. Filtering device according to one of Claims 1 to 5, **characterized in that** the cover module (15) receives an electric heater device (37) and consists in particular of plastic.

7. Filtering device according to Claim 6, **characterized in that** the two pressure-medium connections (34, 35) and an electrical connection (36) are arranged on the same side on the cover module (15), in particular parallel to one another.

8. Filtering device according to Claim 7, **characterized in that** all three connections (34, 35, 36) are arranged in the same radial plane on the cover module (15).

9. Filtering device according to one or more of Claims 1 to 8, **characterized in that** the central receiving bore (31) in the hollow screw (22) has a funnel-shaped entry region (32) which facilitates insertion of the tube stub (39).

10. Filtering device according to Claim 9, **characterized in that** the receiving bore (31) is delimited by an annular collar, and the central tube stub (39) has a sealing ring (41) which separates the dirty and clean sides (26, 27) from one another.

## Revendications

1. Dispositif de filtre modulaire, notamment pour carburant Diesel, comprenant une tête de filtre (13) composée de plusieurs modules, à laquelle est vissée au moyen d'un vissage creux central une boîte de filtre (11) interchangeable, une vis creuse (22) fixée à cet effet dans la tête de filtre (13) pénétrant par un embout fileté (24) tubulaire dans la boîte de filtre (11), alors que la tête de filtre (13) comporte un module de couvercle (15) présentant les raccords (34, 35) pour l'admission et l'évacuation ainsi qu'un module de carter (14) disposé entre le module de couvercle (15) et la boîte de filtre (11), la vis creuse (22) étant d'un seul tenant et fixée de manière étanche et fixe dans le module de carter (14),
**caractérisé en ce que**
la vis creuse (22), du côté opposé au raccord fileté, présente un perçage de logement central (31) dans lequel pénètre le module de couvercle (15) par un embout tubulaire central (39) complémentaire du perçage de logement (31), et **en ce que** le module de couvercle (15) est fixé de manière amovible dans le module de carter (14) à l'aide d'une fermeture rapide (42) exécutant un mouvement de rotation.

2. Dispositif de filtre selon la revendication 1,
**caractérisé en ce que**
sur le module de carter (14) des moyens de fixation (21) sont disposés pour fixer le dispositif de filtration (10) à un élément de machine.

3. Dispositif de filtre selon la revendication 1 ou 2,
**caractérisé en ce que**
le module de carter (14) présente pour l'essentiel la forme d'un disque annulaire (16), pour lequel un anneau extérieur (17) en forme de douille est relié par l'intermédiaire d'un fond plat (18) à un anneau intérieur (19) en forme de moyeu, dans lequel la vis creuse (22) est fixée par une partie de tête (23) de manière inamovible et étanche, et les moyens de fixation (21) sont rapportés par moulage sur la face extérieure de l'anneau extérieur (17).

4. Dispositif de filtre selon l'une quelconque des revendications 1 à 3,
**caractérisé en ce que**
le module de carter (14) est en métal, notamment en aluminium ou un composé d'aluminium.

5. Dispositif de filtre selon l'une quelconque des revendications 3 à 4,
**caractérisé en ce que**
sur l'anneau extérieur (17) du module de carter (14), à sa face intérieure, et sur le module de couvercle (15), à sa périphérie extérieure, des brides et des rampes (43) sont disposées pour une fermeture rapide (42) exécutant un mouvement de rotation.

6. Dispositif de filtre selon l'une quelconque des revendications 1 à 5,
**caractérisé en ce que**
le module de couvercle (15) reçoit un dispositif de chauffage électrique (37) et qu'il est notamment en matière plastique.

7. Dispositif de filtre selon la revendication 6,
**caractérisé en ce que**
les deux raccords de moyens de pression (34, 35) et un raccord électrique (36) sont disposés sur la même face du module de couvercle (15), en particulier parallèlement les uns aux autres.

8. Dispositif de filtre selon la revendication 7,
**caractérisé en ce que**
les trois raccords (34, 35, 36) sont disposés sur le module de couvercle (15) dans le même plan radial.

9. Dispositif de filtre selon l'une ou plusieurs des revendications 1 à 8,
**caractérisé en ce que**
le perçage de logement central (31) dans la vis creuse (22) présente une zone d'entrée (32) en forme d'entonnoir facilitant l'emboîtement de l'embout tubulaire (39).

10. Dispositif de filtre selon la revendication 9,
**caractérisé en ce que**
le perçage de logement (31) est délimité par un collet annulaire et l'embout tubulaire (39) porte une bague d'étanchéité (41) séparant le côté sale du côté propre (26, 27).
